# FASCICULE DE BREVET EUROPEEN

(11) **EP 1 115 249 B1**
(45) Date de publication et mention de la délivrance du brevet: **28.12.2011**
(21) Numéro de dépôt: 01400015.2
(22) Date de dépôt: 04.01.2001
(51) Int. Cl.: H04N 7/173

(54) **Procédé de gestion d'un décodeur relié à Internet et son décodeur associé**
Verfahren zum Verwalten eines am Internet angeschlossenen Decoders und entsprechender Decoder
Management method for a decoder connected to the Internet and associated decoder

(30) Priorité: 04.01.2000 FR 0000037
(43) Date de publication de la demande: 11.07.2001
(73) Titulaire: SAGEMCOM BROADBAND SAS, 92500 Rueil Malmaison (FR)
(72) Inventeur: Lodola, M. Patrick, 91 330 Yerres (FR)
(74) Mandataire: Schmit, Christian Norbert Marie

(56) Documents cités:
- WO-A-97/28499
- WO-A-99/30493
- US-A- 5 657 072
- US-A- 5 801 747
- US-A- 5 940 074

## Description

La présente invention a pour objet un procédé de gestion d'un décodeur relié à Internet. Elle concerne aussi un décodeur associé. Elle s'applique au domaine des décodeurs de télévision reliés d'une part à un téléviseur et d'autre part à une source de données distante. Ainsi, le décodeur reçoit des informations de la source de données et les transmet au téléviseur sous une forme appropriée. Le but de l'invention est de permettre à un utilisateur de visualiser sur un écran du téléviseur des informations à visualiser et pour lequel on supprime un temps d'attente lié à l'établissement de la communication avec la source de données distante comportant ce message à visualiser et un temps de téléchargement associé.

Actuellement, on connaît deux principaux types de sources de données distantes permettant de télécharger un message à visualiser. Il s'agit du réseau dit Internet et du réseau dit câblé, satellite ou terrestre. Un réseau câblé utilise une liaison filaire avec un câble coaxial par exemple alors que pour le réseau satellite ou terrestre la liaison est constituée par l'espace libre. Cependant, on peut étendre ceux-ci à tout type de sources de données distantes permettant de télécharger des messages à visualiser. Généralement, ces deux types d'accès sont juxtaposés. En effet, on utilise le décodeur pour recevoir des informations du réseau câblé, satellite ou terrestre et on utilise un modem pour recevoir des informations du réseau Internet via le réseau téléphonique commuté par exemple. Toutefois, le décodeur peut recevoir des messages à visualiser du type de ceux que l'on peut obtenir à partir du réseau Internet.

Dans l'art antérieur, on connaît l'enseignement du document technique WO 99117227A qui exprime un stockage d'informations statistiques dans un serveur de contenu.

Plusieurs problèmes existent en rapport avec cet état de la technique. En effet, tout d'abord avec le modem et le réseau Internet, on obtient des messages à visualiser que l'on peut mémoriser mais dont une consultation ultérieure nécessitera un nouvel accès au réseau Internet. En effet, le message à visualiser qui a été mémorisé n'est plus forcément mis à jour lors de ce nouvel accès. D'autre part, dans le cas du décodeur, alors qu'il est relié à un réseau par l'intermédiaire d'un opérateur, ce décodeur peut recevoir de l'opérateur des messages à visualiser de type Internet. Cependant, ces messages à visualiser sont prédéfinis et imposés à l'utilisateur.

En outre, et pour les deux types d'accès précédents, un autre problème existe du fait du temps de connexion nécessaire. En effet, du moment où l'utilisateur choisit, sélectionne, un message à visualiser, ou plus précisément une adresse où se trouve le message à visualiser, et l'instant où un contenu de ce message à visualiser est affiché sur l'écran du téléviseur, il peut s'écouler un temps de l'ordre de plusieurs secondes voire minutes. Ce temps d'accès dépend en fait d'un débit alloué à un utilisateur, ce débit alloué est en fonction du nombre d'utilisateurs utilisant une même liaison simultanément. En conséquence, d'une manière simplifiée, on peut dire qu'une liaison autorise en fait un débit maximum et que l'on divise ce débit maximum par un nombre d'utilisateurs utilisant cette liaison afin d'obtenir un débit utile par utilisateur.

La présente invention a pour objet de remédier à ces problèmes en proposant un procédé permettant de gérer le décodeur afin d'assurer à l'utilisateur un accès à des messages à visualiser plus rapide. Pour cela, on crée une base de données interne, dans le décodeur par exemple, comportant les messages à visualiser que l'on met à jour régulièrement. L'utilisateur accède ainsi en priorité à la base de données plutôt qu'au réseau ce qui permet d'optimiser ainsi les temps d'accès en les réduisant le plus souvent possible à un temps d'accès à la base de données. On réalise en outre un décodeur permettant de mettre en oeuvre l'invention.

L'invention concerne donc un procédé de gestion d'un décodeur relié à un téléviseur et recevant un message à visualiser d'une source de données distante, selon la revendication 1.

Des modes de réalisation avantageux sont présentés dans les revendications dépendantes.

L'invention sera mieux comprisse à la lecture de la description qui suit et à l'examen des figures qui l'accompagnent. Celles-ci ne sont présentées qu'à titre indicatif et nullement limitatif de l'invention. Les figures montrent :

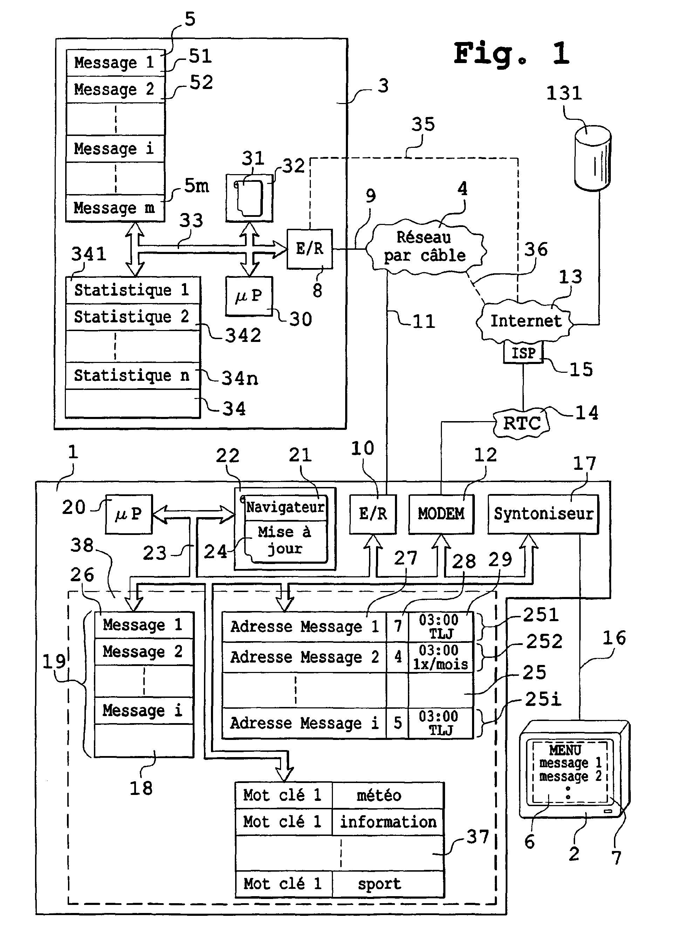

- Figure 1 : un exemple d'architecture d'un décodeur de télévision permettant de mettre en oeuvre le procédé de l'invention.

La figure 1 montre un exemple d'architecture permettant de mettre en oeuvre le procédé de l'invention. Cet exemple montre un décodeur 1 de télévision selon l'invention relié à un téléviseur 2. Ce décodeur 1 reçoit un message à visualiser, identifié par une adresse, d'une source 3 de données distantes. Cela signifie que le décodeur 1 et la source 3 sont généralement séparés par un réseau 4. Ce réseau 4 est dans un exemple préféré un réseau de vidéocommunication par câble coaxial dit réseau câblé soit un réseau de vidéocommunication par satellite.

Dans un fonctionnement normal, le serveur 3 envoie des messages à visualiser au décodeur 1, par l'intermédiaire du réseau 4, qui les transmet au téléviseur 2 sous une forme appropriée. Une forme appropriée signifie pour le téléviseur 2 une forme de signaux que le téléviseur 2 peut utiliser pour afficher une image compréhensible. Pour permettre ce fonctionnement normal, le serveur 3 comporte une mémoire 5 comportant des messages 5 1 à 5 m L'utilisateur du téléviseur 2 peut sélectionner un message à visualiser données distante reliée à un réseau 13, par exemple une source 13 1. Ce réseau 13 est appelé couramment réseau Internet et on y accède généralement par l'intermédiaire d'un réseau 14 de type réseau téléphonique commuté. La source 13 1 est généralement un serveur tel que le serveur 3. Un accès au réseau 13 se fait par l'intermédiaire d'un accès 15 contrôlé par un fournisseur d'accès Internet ou, sous une forme abrégée de sa traduction en anglais, ISP (Internet Service Provider). Ainsi, un utilisateur du téléviseur 2 est relié au décodeur 1 par une liaison 16, le décodeur 1 pouvant être relié par la liaison 16 par l'intermédiaire d'un syntoniseur 17 comme émetteur par exemple.

Le décodeur 1 de l'invention comporte une mémoire 18 de sauvegarde d'une base de données. Cette base de données est produite à partir d'une collection 19 de messages reçus du serveur 3 et/ou de la source 13 1. Plus généralement, on sauvegarde dans la mémoire 18 des messages reçus de la source de données distante. Ces messages reçus sont par exemple les messages 5 1 à 5 m ou encore des messages provenant de la source 13 1. Une gestion du décodeur 1 de l'invention est assurée par un microprocesseur 20 commandé par un programme 21 dans une mémoire de programme 22 et un bus 23 de commandes, d'adresses et de données. On nommera par la suite le programme 21 navigateur 21. Ce navigateur 21 permet à un utilisateur du téléviseur 2 de chercher une information à travers le réseau 4 et/ou à travers le réseau 13 et/ou, de manière préférée, dans la mémoire 18.

Selon une première caractéristique essentielle de l'invention, on met à jour un contenu de la base de données à l'aide d'un programme 24 de mise à jour dans la mémoire 22. Ce programme 24 a en charge principalement de remplacer un message de la collection 19 par une version à jour de ce message. En outre, on produit, à partir d'une utilisation de la base de données, une table 25 d'informations 25 1, 25 2 à 25 i statistiques. Une information 25 1 à 25 i comporte au moins un paramètre statistique. Un paramètre statistique associé à un message à visualiser permet d'estimer un intérêt de l'utilisateur pour ce message à visualiser. Cette table 25 peut être contrôlée par le programme 24 ou par un autre programme statistique de la mémoire 22.

En conséquence, on gère, avec le programme 24, une organisation de la base de données à partir des informations statistiques de la table 25. Par gestion de l'organisation de la base de données, on entend contrôle d'une capacité d'une zone mémoire disponible de la mémoire 18 pouvant accueillir de nouveaux messages. On entend aussi mise à jour des messages ainsi mémorisés dans la mémoire 18. Plus généralement, on entend toute opération permettant d'agir sur un message mémorisé dans la mémoire 18 afin de rendre son contenu pertinent pour un utilisateur, un contenu pertinent étant un contenu le plus récent. Ainsi, lorsqu'un utilisateur demande une connexion à une adresse souhaitée d'un message à visualiser, le navigateur 21 contrôle en premier lieu si le message à visualiser associé à cette adresse souhaitée est présent dans la base de données, c'est-à-dire s'il fait partie de la collection 19. Dans le cas contraire, le navigateur 21 prend en charge de réaliser une connexion avec la source de données distante. Suite à cette connexion, un contenu du message à visualiser, situé à l'adresse souhaitée, peut être prélevée pour être visualisée et sauvegardée dans la mémoire 18. Si le message à visualiser se trouve dans la mémoire 18, un temps d'accès à ce message est réduit à un temps d'accès à la mémoire 18 alors que si le message doit être téléchargé à partir de la source de données alors le temps d'accès dépend du temps nécessaire à l'établissement de la connexion avec cette source de données distante, par exemple le serveur 3, ainsi qu'une durée du téléchargement qui peut être très lent notamment pour accéder à la source 13 1.

Dans une variante préférée de l'invention, le navigateur 21 et/ou le programme 24 de mise à jour permettent d'assurer une gestion automatique de la mise à jour des données dans la mémoire 18. Pour cela le programme 24, par exemple, indique au programme 21 qu'une mise à jour est nécessaire. Dans ce cas le programme 21 accède à la source de données distante régulièrement afin de prélever un contenu mis à jour associé à un message à visualiser de la base de données. La source de données distante précédente est bien évidemment celle qui comporte une version la dernière en date du message à visualisé considéré. Par exemple, la mémoire 18 comporte un message 26 qui doit être mis à jour. On rappelle qu'un message à visualiser est identifié par une adresse. Ainsi, le navigateur 21 établit une connexion à cette adresse afin d'en prélever le contenu et de le substituer au message 26. Dans cet exemple l'adresse du message 26 correspond à l'emplacement du message 5 1 du serveur 3. Dans ce cas, le message 5 1 va venir remplacer le message 26.

Une information 25 1 à 25 i comporte plusieurs champs dont un champ permet de mémoriser l'adresse d'un message correspondant dans la mémoire 18 par exemple, pour l'information 25 1, un champ 27. Dans un exemple simple de réalisation de l'invention, une information statistique comporte trois champs. Ainsi, l'information 25 1 par exemple, comporte un premier champ correspond au champ 27, un deuxième champ 28 permettant de mémoriser quant à lui un paramètre statistique et un champ 29 permet quant à lui de programmer une date à laquelle la mise à jour doit être effectuée.

Dans cet exemple de fonctionnement, elle place dans une information statistique, par exemple l'information 25 1, un paramètre statistique relatif à une fréquence d'utilisation du message à visualiser dont une adresse est mémorisée dans le champ 27, ce paramètre statistique étant mémorisé dans le champ 28.

Dans un exemple d'application, l'adresse du champ 27 permet d'identifier un message à visualiser relatif à un bulletin météorologique quotidien. Ainsi, dans le champ 29, on place une information indiquant au programme 24 quand doit être faite la mise à jour. Dans l'exemple la mise à jour doit être effectuée tous les jours à trois heures du matin. En conséquence, le champ 29 comportera une valeur indiquant au programme 24 que le message associé à cette adresse contenu dans le champ 27 doit être réactualisée tous les jours à trois heures du matin par exemple. Ainsi, tous les matins lorsque l'utilisateur du téléviseur 2 regardera le bulletin météorologique, le navigateur 21 ira chercher le message relatif à ce bulletin dans la mémoire 18 et pourra donc répondre à la requête de l'utilisateur quasi immédiatement, au temps d'accès à la mémoire 18 près.

Cependant, il peut arriver que l'on ne peut plus sauvegarder de messages à visualiser dans la mémoire 18. Dans ce cas le programme 24 élimine un message à visualiser jugé le moins utilisé. Pour juger d'une fréquence de visualisation, et donc d'utilisation d'un message à visualiser, le programme 24 utilise un contenu des champs tel que le champ 28 et supprime le message dont une valeur dans ce champ indique que le message associé est le moins utilisé. En outre, le décodeur 1 est généralement associé avec un serveur d'un opérateur, par exemple le serveur 3. Ainsi le serveur 3, comportant un microprocesseur 30 commandé par un programme 31 dans une mémoire de programme 32 et un bus 33 de commandes, d'adresses et de données, peut émettre à destination du décodeur 1 des messages prédéfinis et imposés. Ces messages ne sont pas toujours opportuns. Dans ce cas et dans un exemple préféré de l'invention le navigateur 21 émet à destination du serveur 3 un contenu de la table 25. Le serveur 3, recevant le contenu de la table 25, le sauvegarde dans une mémoire 34 de sauvegarde à un emplacement 34 1 réservé à un utilisateur du décodeur 1, d'autres emplacements 34 2 à 34 n étant réservés à d'autres utilisateurs pouvant aussi accéder au serveur 3. Ces informations que le serveur 3 impose au décodeur 1 peuvent être des informations issues de la source 13 1 relié au réseau 13 auquel le serveur 3 est relié soit directement par une liaison 35 soit par le réseau 4 qui lui même est relié au réseau 13 par une liaison 36. Ainsi, avec le contenu de la table 25, il est facile d'estimer un profil de l'utilisateur. À partir de ce profil le programme 31 du serveur peut choisir pour chaque utilisateur un type de message à lui envoyer. En conséquence, un utilisateur reçoit dorénavant de l'opérateur des informations à visualiser en concordance avec le profil établi à partir de la table 25 qui a été émise au serveur 3. Ces informations sont envoyées à travers la liaison 11 à haute vitesse de façon automatique.

En outre, un paramètre statistique peut être, on l'a vu, un identifiant du message à visualiser. Cet identifiant est une information telle qu'une adresse ou un mot-clé permettant de caractériser le message à visualiser. En effet, le plus souvent dans des messages émis à partir du réseau 13, chaque message à visualiser comporte un mot ou un groupe de mots permettant de caractériser ce message à visualiser. Dans l'exemple du bulletin météorologique, on pourrait avoir comme mots-clés les mots météo et/ou information. Ainsi, on pourrait envisager de mémoriser ces mots-clés dans le décodeur 1 dans une table 37 ou alors de les mémoriser dans des champs supplémentaires de la table 25.

Dans l'invention, la mémoire 18 est placée dans le décodeur 1. Cependant, on pourrait très bien envisager de placer la mémoire 18 dans le téléviseur 2. En outre, la mémoire 18, la table 25 ainsi que la table 37 peuvent être soit trois éléments de mémoire physiquement séparés soit appartenir à une même mémoire 38 de sauvegarde. Dans un exemple, cette mémoire 38 est une mémoire dite mémoire de masse ou encore disque dur, c'est-à-dire qu'il s'agit dans un exemple simple d'un disque rotatif sur lequel on mémorise des informations sous une forme magnétique.

Dans une variante de l'invention, le programme 24 met à jour la base de données lorsqu'une utilisation du décodeur 1 le permet, c'est à dire lorsqu'un utilisateur n'utilise pas le décodeur 1 en faisant des accès au réseau 13 par exemple. On évite ainsi de surcharger le microprocesseur 20 et donc de ralentir un fonctionnement du décodeur 1.

## Revendications

1. Procédé de gestion d'un décodeur (1) relié à un téléviseur (2) et recevant un message à visualiser d'une source de (3, 13 1) données distante, ce message étant identifié par une adresse, dans lequel :
- on produit dans une mémoire (18) de sauvegarde du décodeur une base de données à partir d'une collection (19) de messages reçus de la source de données distante,
- on met à jour la base de données à l'aide d'un programme (24) de mise à jour,
**caractérisé en ce que** :
- on produit dans le décodeur, à partir d'une utilisation de la base de données, une table (25) d'informations (25 1-25 i) statistiques, une information statistique comportant au moins un paramètre statistique,
- on gère, avec le programme de mise à jour, une capacité de ladite mémoire (18) de sauvegarde dudit décodeur à partir des informations statistiques de la table,
**en ce que** lors d'une demande de connexion à une adresse souhaitée d'un message à visualiser :
- on contrôle en premier lieu si le message à visualiser associé à cette adresse souhaitée est présent dans la base de données sinon on prélève à partir de la source de données distante un contenu du message à visualiser situé à l'adresse souhaitée,
**en ce que** :
- on place dans une information statistique de ladite table d'informations statistiques un paramètre statistique relatif à une fréquence d'utilisation du message à visualiser,
**en ce que** lorsqu'on ne peut plus sauvegarder de message à visualiser dans la mémoire de sauvegarde :
- on élimine un message à visualiser présent dans la base de données en partant du moins utilisé,
et **en ce que** :
- on associe le décodeur avec un serveur (3) d'un opérateur,
- on transmet au serveur la table d'informations statistiques,
- un programme (31) du serveur choisit pour chaque utilisateur un message à visualiser à envoyer au décodeur à partir d'un profil utilisateur établi à partir de la table transmise,
- on reçoit du serveur ledit message à visualiser choisi.

2. Procédé selon la revendication 1 **caractérisé en ce que**
- on accède à la source de donnée distante par l'intermédiaire d'un réseau (4) câblé et ou d'un réseau satellite et ou d'un réseau (13) Internet.

3. Procédé selon la revendication 1 ou 2 **caractérisé en ce que**
- on accède à la source de données distante régulièrement afin de prélever un contenu mis à jour associé à un message à visualiser de la base de données.

## Claims

1. Method for controlling a decoder (1) connected to a television set (2) and receiving a message to be visualized from a distant data source (3, 13 1), this message being identified by an address, in which:
- a data base is generated in a backup memory (18) of the decoder from a collection (19) of messages received from the distant data source,
- the data base is actualized by using an actualizing program (24),
**characterized in that**:
- a table (25) of statistical information (25 1-25 i) is generated in the decoder, from a use of the data base, a piece of information comprising at least one statistical parameter,
- a capacity of said backup memory (18) in said decoder is controlled, with the actualization program, from the statistical information in the table,
**in that** when requesting a connection to a desired address of a message to be visualized:
- it is initially checked whether the message to be visualized associated to this desired address is present in the data base, if not a content of the message to be visualized at the desired address is taken from the distant source data,
**in that**:
- a statistical parameter regarding a frequency of use of the message to be visualized is placed in a piece of statistical information in said table of statistical information,
**in that**, when a message to be visualized cannot be backed up in the backup memory any more:
- a message to be visualized in the data base is suppressed by starting from the less used message,
and **in that**:
- the decoder is associated with a server (3) of an operator,
- the table of statistical information is transmitted to the server,
- a program (31) of the server selects for each user a message to be visualized, which is to be sent to the decoder, from a user profile established from the transmitted table,
- said selected message to be visualized is received from the server.

2. Method according to claim 1 **characterized in that**:
- the distant data source is accessed via a wired network (4) and/or a satellite network and/or an Internet network (13).

3. Method according to claim 1 or 2 **characterized in that**:
- the distant data source is regularly accessed so that an actualized content associated with a message to be visualized is taken from the data base.

## Patentansprüche

1. Verfahren zur Steuerung eines Decoders (1), der mit einem Fernseher (2) verbunden ist, und der von einer entfernten Datenquelle (3, 13 1) eine optisch anzuzeigende Mitteilung erhält, wobei diese Mitteilung durch eine Adresse identifiziert wird, bei dem:
- in einer Sicherungsspeicher (18) des Decoders eine Datenbank anhand einer Sammlung (19) von aus der entfernten Datenquelle erhaltenen Mitteilungen erzeugt wird,
- die Datenbank mittels eines Aktualisierungsprogramms (24) aktualisiert wird,
**dadurch gekennzeichnet, dass**:
- im Decoder anhand einer Benutzung der Datenbank eine Tabelle (25) mit statistischen Informationen (25 1-25 i) erzeugt wird, wobei eine statistische Information die wenigstens einen statistischen Parameter umfasst,
- mit dem Aktualisierungsprogramm eine Kapazität des genannten Sicherungsspeichers (18) des Decoders anhand von den statistischen Informationen in der Tabelle gesteuert wird,
dass bei einem Antrag für eine Verbindung mit einer gewünschten Adresse einer optisch anzuzeigenden Mitteilung:
- in erster Linie überprüft wird, ob die optisch anzuzeigende, mit dieser gewünschten Adresse assoziierte Mitteilung in der Datenbank vorhanden ist, wobei sonst aus der entfernten Datenquelle ein Inhalt der optisch anzuzeigenden Mitteilung an der gewünschten Adresse entnommen wird,
dass:
- in eine statistische Information in der genannten Tabelle mit statistischen Informationen ein statistischer Parameter betreffend eine Häufigkeit der Benutzung der optisch anzuzeigenden Mitteilung eingesetzt wird,
dass, wenn in den Sicherungsspeicher keine optisch anzuzeigende Mitteilung mehr gesichert wird:
- eine optisch anzuzeigende Mitteilung in der Datenbank ausgehend von der am wenigsten benutzten Mitteilung beseitigt wird,
und dass:
- der Decoder mit einem Server (3) eines Anbieters assoziiert wird,
- zum Server die Tabelle mit statistischen Information übermittelt wird,
- ein Programm (31) des Servers für jeden Benutzer eine dem Decoder zusendende, optisch anzuzeigende Mitteilung aus einem anhand von der übermittelten Tabelle bestimmten Benutzerprofil auswählt,
- vom Server die genannte ausgewählte, optisch anzuzeigende Mitteilung erhalten wird.

2. Verfahren nach Anspruch 1, **dadurch gekennzeichnet, dass**:
- die entfernte Datenquelle über ein festverdrahtetes Netz (4) und/oder ein Satellitennetz und/oder ein Internetnetz (13) zugegriffen wird.

3. Verfahren nach Anspruch 1 oder 2, **dadurch gekennzeichnet, dass**:
- die entfernten Datenquelle regelmäßig zugegriffen wird, um einen aktualisierten Inhalt zu entnehmen, der mit einer optisch anzuzeigenden Mitteilung in der Datenbank assoziiert ist.
